# EUROPEAN PATENT APPLICATION

(11) **EP 4 717 579 A1**
(43) Date of publication of application: **01.04.2026**
(21) Application number: 24809978.0
(22) Date of filing: 20.02.2024
(51) Int. Cl.: B62M 6/65

(54) **INNER VARIABLE-SPEED HUB WITH BUILT-IN ELECTRIC MOTOR, BICYCLE, AND GEAR SHIFTING CONTROL METHOD**

(30) Priority: 20.05.2023 CN 202310571433
(71) Applicant: Guangdong Lofandi Intelligent Technology Co., Ltd, Guangzhou, Guangdong 510700 (CN)
(72) Inventor: LI, Jichu, Guangzhou, Guangdong 510700 (CN); LIN, Jiehuang, Guangzhou, Guangdong 510700 (CN); HE, Xu, Guangzhou, Guangdong 510700 (CN)
(74) Representative: Ripamonti, Enrico
(86) International application number: PCT/CN2024/077661
(87) International publication number: WO 2024/239729

(57) **Abstract**

An inner variable-speed hub with a built-in electric motor, the hub comprising: an electric motor module (8), an input member (3), an output member (1) and a mandrel (4), wherein the mandrel (4) is fixed to a frame; and the electric motor module (8) is mounted on the mandrel (4) and is used for outputting a torque to the output member (1). The hub further comprises a transmission mechanism (7), a driving mechanism (5) and a gear shifting control mechanism (6), wherein the driving mechanism (5), the gear shifting control mechanism (6) and the transmission mechanism (7) are sequentially connected to each other and are all mounted on the mandrel (4); the input member (3) is fixedly connected to the transmission mechanism (7), and is used for inputting the torque into the transmission mechanism (7); the output member (1) is connected to the transmission mechanism (7), and is used for outputting the torque to a wheel; the transmission mechanism (7) has at least two transmission ratios; the driving mechanism (5) drives, in a manual and/or automatic manner, the gear shifting control mechanism (6) to rotate to a specific angle, so as to change transmission relationships between components in the transmission mechanism (7), thereby changing the transmission ratios of the transmission mechanism (7). The inner variable-speed hub has two modes, i.e., a manual variable-speed mode and an automatic variable-speed mode, and an electric motor is used for providing assisting power, such that riding is easier and more convenient. Further comprised are a bicycle and a gear shifting control method.

## Description

The present application claims the priority to Chinese Patent Application No. 202310571433.1, titled "INNER VARIABLE-SPEED HUB WITH BUILT-IN ELECTRIC MOTOR, BICYCLE, AND GEAR SHIFTING CONTROL METHOD", filed on May 20, 2023 with the China National Intellectual Property Administration, the entire disclosure of which is incorporated herein by reference.

### FIELD

The present application relates to the technical field of internal gear systems, and in particular to an internal gear hub with a built-in motor, a bicycle, and a control method for gear shifting.

### BACKGROUND

Ebike is the abbreviation of Electric Bike, which is also known as an electric-assist bicycle. It uses a battery and a motor to provide auxiliary power. Unlike conventional bicycles, the Ebike makes cycling easier and more convenient due to the auxiliary power provided by the battery and the motor.

The battery of the Ebike is typically located in the middle of the bicycle frame. The capacity of the battery determines the maximum distance the Ebike can travel. Common batteries on the market include nickel-cadmium batteries, nickel-metal hydride batteries, lithium-ion batteries and the like, among which the lithium-ion batteries are widely used in the power system of the Ebike, since they are lightweight, long-lasting, and easy to charge and discharge.

The motor is usually mounted on the wheel or in the middle of the frame, and can be powered by the battery. The motor is generally referred to as a rear motor if it is mounted on the wheel, or a mid-drive motor if it is mounted in the middle of the frame. Ebike motors are brushless direct-current motors, which may have different power levels such as 250W, 350W, 500W, etc.

The Ebike is equipped with a cadence sensor, a torque sensor and the like, among which the cadence sensor is the most important, which can regulate the output power of the motor by measuring the rotational speed of the pedals.

The existing rear motor on the market are all single-speed, which prevents the rider from freely shifting the gear. Furthermore, the Ebike has a heavy weight. When the battery runs out, the rider experiences a heavy burden, resulting in poor cycling experience.

Therefore, improvements and developments are needed for the related art.

### SUMMARY

An object of the present application is to provide an internal gear hub with a built-in motor and a bicycle, which have two modes, namely manual and automatic gear shifting modes. The motor provides auxiliary power, making cycling easier and more convenience.

To address the aforementioned technical issues, the internal gear hub with the built-in motor according to the present application includes a motor module, an input component, an output component, and an axle. The axle is fixed on a frame. The motor module is mounted on the axle and configured to output a torque to the output component. The internal gear hub further includes a driving mechanism, a gear-shifting control mechanism, and a transmission mechanism, which are connected in the listed sequence and mounted on the axle. The input component is fixedly connected to the transmission mechanism and configured to input a torque to the transmission mechanism. The output component is connected to the transmission mechanism and configured to output the torque to a wheel. The transmission mechanism has at least two transmission ratios. The driving mechanism is configured to manually and/or automatically drive the gear-shifting control mechanism to rotate to a predetermined angle, to change a transmission relationship among components of the transmission mechanism to shift among the transmission ratios of the transmission mechanism.

Further, the motor module includes a stator and a magnet. The stator is fixed to the axle. The magnet is arranged at a radial side of the stator and is connected to the output component.

Further, the motor module further includes a motor reduction module. The motor reduction module includes a reduction planetary carrier, a reduction planetary gear hinged to the reduction planetary carrier, a reduction sun gear, and a reduction gear ring. The reduction sun gear is fixed to the axle. The reduction sun gear meshes externally with the reduction planetary gear. The reduction gear ring meshes internally with the reduction planetary gear. The magnet is connected to the reduction planetary carrier. The reduction gear ring is connected to the output component.

Further, the driving mechanism is an electric driving mechanism.

Further, a buffer structure is connected between the driving mechanism and the gear-shifting control mechanism.

Further, the buffer structure includes a gear-shifting protection component and an elastic element. One end of the elastic element is connected to the gear-shifting protection component, and the other end of the elastic element is connected to the gear-shifting control mechanism.

Further, the driving mechanism includes a driving module, an output gear, and a gear-shifting actuating gear. An output shaft of the driving module is connected to the output gear. The output gear meshes with the gear-shifting actuating gear. The gear-shifting actuating gear is connected to the gear-shifting control mechanism.

Further, the driving mechanism is provided with a gear feedback module.

Further, the gear feedback module includes multiple first Hall elements arranged in a row. The first Hall elements are configured to detect a magnetic field intensity of a magnet mounted in a first magnet mounting groove of a gear-shifting actuating gear of the driving mechanism to obtain a pulse signal, and determine a gear position to which a driving module of the driving mechanism is rotated.

Further, the gear feedback module includes multiple second Hall elements arranged in a row. The second Hall elements are configured to detect a magnetic field intensity of a magnet mounted in a second magnet mounting groove of a gear-shifting protection component of the driving mechanism to obtain a pulse signal, and determine a current gear position of the internal gear hub.

Further, the driving mechanism is provided with a gear feedback module.

Further, the gear feedback module includes a third Hall element. The third Hall element is configured to detect a magnetic field intensity of a magnet mounted in a third magnet mounting groove of the output component to obtain a pulse signal, and calculate a rotational speed of the internal gear hub.

Further, the driving mechanism further includes a control box and a sealing cover connected to the control box. A driving module and a circuit board are mounted in the control box. The circuit board is provided with a gear feedback module, a rotational speed feedback module, and a controller. The driving module, the gear feedback module, and the rotational speed feedback module are electrically connected to the controller.

Further, the gear-shifting control mechanism is provided with a pawl seat and a gear-shifting control module. The pawl seat is sleeved on the axle. A pawl is hinged to the pawl seat. The gear-shifting control module is provided with an open groove. The open groove is configured to control the pawl to expand or retract to change the transmission relationship among the components of the transmission mechanism.

Further, the number of the open groove is plural.

Further, the open groove is arranged between adjacent gear angles.

Further, the open groove is provided with a control surface, which is configured to control the pawl to expand or retract.

Further, the control surface includes a first control surface and a second control surface. The first control surface is an arc surface, and is configured to control the pawl to retract. The second control surface is an inclined surface, and is configured to control the pawl to expand.

Further, the gear-shifting control mechanism and the transmission mechanism are connected by insertion.

Further, the gear-shifting control mechanism is provided with a third connecting part. The driving mechanism is provided with a second connecting part. The third connecting part of the gear-shifting control mechanism and the second connecting part of the transmission mechanism are connected by insertion.

Further, the gear-shifting control mechanism includes a gear-shifting control module. The gear-shifting control module includes a first end part and a second end part that are connected by a connecting rod.

Further, the transmission mechanism is provided with at least two planetary gear mechanisms and at least one clutch structure. The driving mechanism is configured to manually or automatically change a transmission relationship of the planetary gear mechanisms. The planetary gear mechanisms are configured to change the rotational speed and transmit the torque, and the clutch structure is configured to selectively output the torque to the output component.

Further, the planetary gear mechanisms include a first sun gear, a second sun gear, a planetary carrier, a dual planetary gear, and a gear ring. The dual planetary gear is rotatably connected to the planetary carrier. The gear ring has fifth gear teeth. The dual planetary gear has third gear teeth and fourth gear teeth. The first sun gear has first gear teeth. The second sun gear has second gear teeth. The first gear teeth of the first sun gear mesh externally with the third gear teeth of the dual planetary gear. The second gear teeth of the second sun gear mesh externally with the fourth gear teeth of the dual planetary gear. The fifth gear teeth of the gear ring mesh internally with the fourth gear teeth of the dual planetary gear.

Further, the clutch structure is arranged between the planetary carrier and the gear ring.

A bicycle is further provided according to the present application, which includes the internal gear hub with the built-in motor as described above.

A control method for gear shifting is further provided according to the present application, applied to a bicycle with a motor and a gear-shifting module. The method includes interrupting a power input to a motor module or limiting a current supplied to the motor module before the gear-shifting module performs a gear shifting operation, keeping the interruption or the limitation for a predetermined period of time until the gear shifting operation is finished, and restoring the power input to the motor module or removing the limitation to the current supplied to the motor module.

It can be known from the above description that, the internal gear hub with the built-in motor according to the present application has both manual and automatic gear shifting modes. In the manual gear shifting mode, the rider can freely shift the gear according to actual road conditions, thereby enhancing flexibility of cycling. In the automatic gear shifting mode, the gear is automatically shifted according to a program, thereby improving the cycling comfort. The motor provides auxiliary power, which makes cycling easier and more convenient and increases the adaptability, so that it is suitable for various terrains and scenarios such as urban cycling, suburban cycling, mountain biking, travel, commuting and other applications.

Other features and advantages of the present application will be described in the following descriptions. Part of them will become obvious from the specification, or may be known through implementation of the present application. The objects and other advantages of the present application may be achieved and obtained from structures specifically referred to in the specification, the claims, and the accompanying drawings.

### BRIEF DESCRIPTION OF THE DRAWINGS

FIG. 1 is a schematic structural view of an electric-assist bicycle mounted with an internal gear hub with a built-in motor according to the present application;
FIG. 2 is a perspective view of the internal gear hub with the built-in motor according to the present application;
FIG. 3 is a front view of the internal gear hub with the built-in motor according to the present application;
FIG. 4 is a left view of the internal gear hub with the built-in motor according to the present application;
FIG. 5 is a sectional view taken along a line A-A in FIG. 4;
FIG. 6 is a perspective view of a driving mechanism;
FIG. 7 is a perspective view of the driving mechanism from another perspective;
FIG. 8 is an exploded view of the driving mechanism;
FIG. 9 is an exploded view of the driving mechanism from another perspective;
FIG. 10 is a partially enlarged view of a portion B in FIG. 6;
FIG. 11 is a perspective view of a gear-shifting actuating gear;
FIG. 12 is a perspective view of a gear-shifting protection component;
FIG. 13 is a perspective view of a gear-shifting control mechanism;
FIG. 14 is a perspective view of a gear-shifting control module;
FIG. 15 is a front view of the gear-shifting control module;
FIG. 16 is a sectional view taken along a line C-C in FIG. 15;
FIG. 17 is a sectional view taken along a line D-D in FIG. 15;
FIG. 18 is a perspective view of a pawl seat;
FIG. 19 is a perspective view of a first pawl;
FIG. 20 is a perspective view of the first pawl from another perspective;
FIG. 21 is a schematic structural view of the first pawl in two states;
FIG. 22 is a schematic structural view showing the interaction of the first pawl and a first sun gear;
FIG. 23 is a perspective view of a transmission mechanism;
FIG. 24 is a perspective view of the transmission mechanism from another perspective;
FIG. 25 is an exploded view of the transmission mechanism;
FIG. 26 is a longitudinal sectional view of the transmission mechanism;
FIG. 27 is a schematic structural view of a clutch structure;
FIG. 28 is a schematic structural view of the clutch structure in two states;
FIG. 29 shows a power transmission path of the internal gear hub with the built-in motor according to the present application in a first gear;
FIG. 30 shows a power transmission path of the internal gear hub with the built-in motor according to the present application in a second gear; and
FIG. 31 shows a power transmission path of the internal gear hub with the built-in motor according to the present application in a third gear.

**Reference numerals:**

| | | | |
|---|---|---|---|
| 1. | output component, | 11. | third magnet mounting groove, |
| 21. | first end cover, | 22. | second end cover, |
| 3. | input component, | 4. | axle, |
| 41. | limiting surface, | 42. | first wire passing groove, |
| 43. | second wire passing groove, | 5. | driving mechanism, |
| 51. | control box, | 511. | driving module mounting groove, |
| 512. | circuit board mounting groove, | 513. | through hole, |
| 514. | wire passing hole, | 515. | first limiting groove, |
| 52. | sealing cover, | 53. | driving module, |
| 54. | circuit board, | 541. | first Hall element, |
| 542. | second Hall element, | 543. | third Hall element, |
| 55. | gear-shifting actuating gear, | 551. | sector gear body, |
| 552. | first cylindrical protrusion, | 553. | first mounting hole, |
| 554. | first stop block, | 555. | first magnet mounting groove, |
| 56. | gear-shifting protection component, | 561. | annular body, |
| 562. | first connecting part, | 563. | second magnet mounting groove, |
| 564. | second mounting hole, | 565. | second cylindrical protrusion, |
| 566. | second connecting part, | 567. | second stop block, |
| 57. | elastic element, | 571. | first engaging end, |
| 572. | second engaging end, | 58. | output gear, |
| 59. | transition gear, | 6. | gear-shifting control mechanism, |
| 61. | gear-shifting control module, | 611. | first end part, |
| 6111. | third connecting part, | 6112. | second open groove, |
| 612. | connecting rod, | 613. | second end part, |
| 6131. | first open groove, | 6A. | first control surface, |
| 6B. | second control surface, | 65. | pawl seat, |
| 651. | second limiting groove, | 652. | pawl mounting groove, |
| 653. | circlip groove, | 654. | avoidance groove, |
| 66. | first pawl, | 661. | locking part, |
| 662. | control part, | 6621. | contact surface, |
| 663. | rotating shaft part, | 67. | second pawl, |
| 601. | first gear angle, | 602. | second gear angle, |
| 603. | third gear angle, | 7. | transmission mechanism, |
| 701. | planetary carrier, | 7011. | input component mounting groove, |
| 7012. | third mounting hole, | 702. | first sun gear, |
| 7021. | first gear teeth, | 7022. | locking groove, |
| 703. | second sun gear, | 7031. | second gear teeth, |
| 704. | dual planetary gear, | 7041. | third gear teeth, |
| 7042. | fourth gear teeth, | 705. | gear ring, |
| 7051. | fifth gear teeth, | 706. | bushing, |
| 707. | pin, | 708. | pin retaining ring, |
| 709. | clutch structure, | 7091. | cage, |
| 7092. | roller limiting groove, | 7093. | roller, |
| 7094. | working surface, | 8. | motor module, |
| 81. | stator, | 82. | magnet, |
| 83. | motor reduction module, | 831. | reduction planetary carrier, |
| 832. | reduction planetary gear, | 833. | reduction sun gear, |
| 834. | reduction gear ring, | 9. | control module, |
| 10. | gear-shifting operation module. | | |

### DETAILED DESCRIPTION OF THE EMBODIMENTS

The embodiments of the present application are described in detail below. The examples of the embodiments are illustrated in the drawings, in which same or similar reference numerals always indicate same or similar elements or elements with same or similar functions. The embodiments described with reference to the drawings are exemplary, and are merely used to explain the present application, and should not be construed as limitations to the present application.

In the description of the present application, it should be understood that the orientation or positional relationships indicated by terms such as "center", "longitudinal", "transverse", "length", "width", "thickness", "up", "down", "front", "rear", "left", "right", "vertical", "horizontal", "top", "bottom", "inner", "outer", "clockwise", "counterclockwise", and the like are based on the orientation or positional relationships shown in the drawings, and are merely for the convenience of describing the present application and the simplification of the description, and do not indicate or imply that the device or element referred to must have a particular orientation, or be configured and operated in a particular orientation, which therefore should not be construed as a limitation to the scope of the present application. Moreover, terms such as "first", "second" and the like are merely for description, and should not be construed as indicating or implying relative importance, or implicitly indicating the number of technical features being referred to. In this way, the feature defined by the terms "first", "second" may explicitly or implicitly include one or more such features. In the description of the present application, the term "multiple" means two or more, unless otherwise specifically and clearly defined.

In the description of the present application, it should be noted that, unless otherwise clearly specified and defined, the terms "mounted", "connected to", "connected with" should be understood broadly. For example, they may refer to a fixed connection, a detachable connection, or an integral connection. They may refer to a mechanical connection, an electrical connection, or a communicative connection. They may refer to a direct connection, or an indirect connection through an intermediate medium. They may refer to the communication of interiors of two elements or interactions between two elements. The specific meanings of the above terms in the present application can be understood by those skilled in the art according to specific conditions.

In the present application, unless otherwise clearly specified and defined, the statement that a first feature is located "on top of" or "under" a second feature may include a case where the first and second features directly contact each other, and may also include a case where the first feature contacts the second feature via another feature therebetween rather than directly contacting the second feature. Moreover, the statement that a first feature is located "on top of", "above", or "on" a second feature may include both cases where the first feature is located right above and obliquely above the second feature, or may only indicate that the first feature is located at a higher horizontal level than the second feature. The statement that the first feature is located "under", "below", or "beneath" the second feature may include both cases where the first feature is located right below and obliquely below the second feature, or may only indicate that the first feature is located at a lower horizontal level than the second feature.

Different embodiments or examples for implementation of various structures of the present application are provided as follows. In order to simplify the disclosure of the present application, components and configurations of specific examples are described below. Certainly, they are merely exemplary, and are not intended to limit the present application. Additionally, reference numerals and/or letters may be repeated in different examples of the present application. Such repetitions are for the purpose of simplicity and clarity, but do not indicate the relationship among various embodiments and/or configurations being described. Additionally, specific processes and materials are provided in the present application as examples. However, it will be apparent to those skilled in the art that other processes and/or materials may be used.

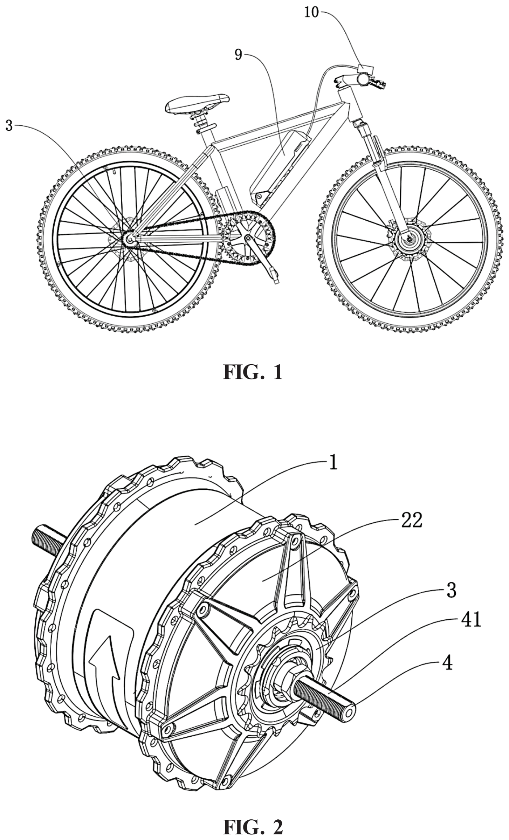

FIG. 1 is a schematic structural view of an electric-assist bicycle mounted with an internal gear hub with a built-in motor according to the present application. As shown in the figure, the internal gear hub with the built-in motor is woven to a wheel rim of a rear wheel of the bicycle. An axle 4 of the internal gear hub is engaged in mounting grooves of a rear fork of the bicycle frame. Two nuts are respectively fastened to the threads at two ends of the axle 4, thereby fixing the axle 4 to the frame. To achieve manual or automatic shifting of a transmission ratio, the internal gear hub further requires a control module 9 and a gear-shifting operation module 10 for control. The controller, the internal gear hub, and the gear-shifting operation module 10 are powered by a power supply built inside the control module 9.

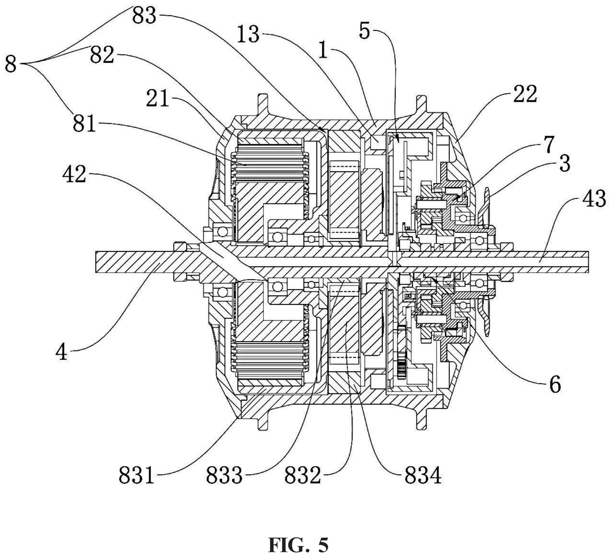

As shown in FIG. 5, the motor module 8 includes a stator 81 and a magnet 82. The stator 81 includes a core and a coil wound on the core. The core is formed by laminated silicon steel sheets. The motor module 8 is typically a high-speed brushless motor, which has a high rotational speed but has a small torque. Generally, the motor module 8 requires an additional motor reduction module 83 to reduce the rotational speed and increase the torque. In the present embodiment, a motor reduction module 83 is arranged at a right side of the stator 81. The motor reduction module 83 is specifically a planetary gear reduction mechanism, which includes a reduction planetary carrier 831, a reduction planetary gear 832, and a reduction sun gear 833. The reduction sun gear 833 is fixed to the axle 4 via a connecting key. The reduction planetary gear 832 is rotatably mounted to the reduction planetary carrier 831. An end of the planetary carrier 701 extends close to the first end cover 21. The stator 81 is fixedly mounted to the axle 4. The magnet 82 is in the form of a thin sheet, and is arranged at a radial side of the stator 81. A very small gap, i.e., an air gap, is present between the stator 81 and the magnet 82. Preferably, the magnet 82 is arranged on an inner wall of the reduction planetary carrier 831 of the motor reduction module 83. Another very small gap is present between the reduction planetary carrier 831 and an output component 1.

S poles and N poles of the magnet 82 are alternatively distributed along the inner wall of the reduction planetary carrier 831. When the coil of the stator 81 is energized, it generates a strong magnetic field, which causes a rotational torque on the magnet 82, driving the reduction planetary carrier 831 to rotate. Since the reduction sun gear 833 is fixed, the reduction planetary carrier 831 is a driving member, and the reduction gear ring 834 is a driven member. The reduction gear ring 834 is fixed to the output component 1, and thus the torque generated by the motor module 8 is transmitted to the output component 1 after undergoing speed reduction, and is further transmitted to the wheel to drive the bicycle to move.

The motor module 8 has a mode in which an assist level can be automatically adjusted. A cadence sensor and a rotational speed sensor continuously send rotational speed signals of the cranks and the wheel to the controller. The controller calculates the cadence, the rotational speed of the wheel, and an acceleration of the rotational speed, and automatically controls the adjustment of the assist level. By detecting the acceleration intention of the rider via the sensors, it provides greater motor output power at higher speeds and less motor output power at lower speeds.

The motor module 8 also has a mode in which it allows manual adjustment of assist level For example, it may provide a no-assist mode, a sport mode, and a full-assist mode. In the no-assist mode, the motor module 8 does not operate, and the bicycle is propelled only by human. In the sport mode, the motor module 8 provides assistance according to the proportion of the torque contributed by human. For example, the rider and the motor module 8 each provide fifty percent of the torque. In the full-assist mode, the torque generated by human is almost zero. The motor module 8 provides full power assistance, while the rider only needs to lightly pedal.

A button for the switch between the power assist modes may be a separate control module or may be integrated in the gear-shifting operation module 10.

FIG. 2 is a perspective view of the internal gear hub with the built-in motor according to the present application. An input component 3 is fixedly mounted to a right side of the internal gear hub with the built-in motor. The input component 3 is configured to transmitted the torque generated by pedaling of the rider. In a chain drive system, the input component 3 is a flywheel. The rider pedals to drive the cranks, thereby driving the chainring to rotate. The chainring drives the flywheel to rotate via a chain, thereby rotating the output component 1 to drive the rear wheel to move forward. In a belt drive system, the output component 3 is a rear pulley. The rider pedals to drive the cranks, thereby driving a front pulley to rotate. The front pulley drives the rear pulley to rotate via a belt, thereby rotating the output component 1 to drive the rear wheel to move forward. In a shaft drive system, the input component 3 is a bevel gear. Correspondingly, the rider outputs the torque to the bevel gear via a transmission shaft to rotate the output component 1.

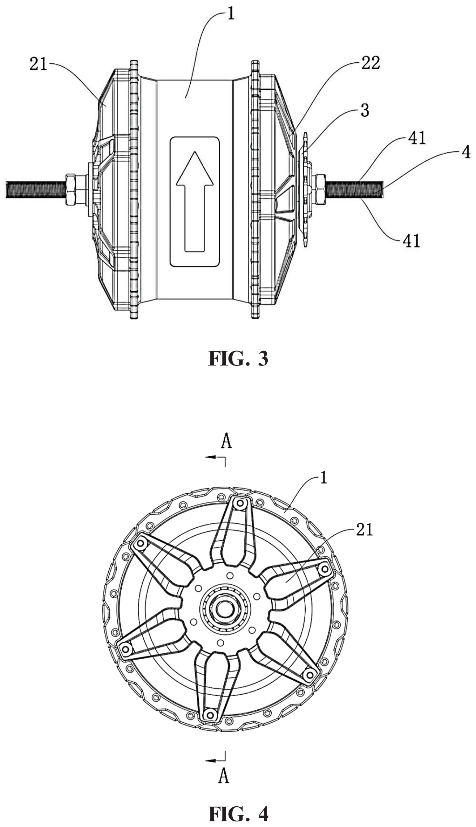

FIG. 3 is a front view of the internal gear hub with the built-in motor according to the present application. FIG. 4 is a left view of the internal gear hub with the built-in motor according to the present application. FIG. 5 is a sectional view taken along a line A-A in FIG. 4. The first end cover 21 is located at a left side of the internal gear hub. A second end cover 22 is located at the right side of the internal gear hub. The output component 1 is located in the middle of the internal gear hub. The end covers and the output component 1 together define a cavity that is sealed to some extent. The motor module 8, a driving mechanism 5, a gear-shifting control mechanism 6, and a transmission mechanism 7 are arranged inside the cavity. An axle 4 passes through the center of the internal gear hub. The motor module 8, the driving mechanism 5, the gear-shifting control mechanism 6, and the transmission mechanism 7 are mounted on the axle 4 in the listed sequence from left to right. The axle 4 has an overall structure configured as a stepped smooth shaft. Outer circumferential surfaces of both ends of the axle 4 are threaded for fastening with the nuts, so as to be fixed to the rear fork of the frame. An inclined first wire passing groove 42 is provided on the axle 4 at a position where the motor module 8 is mounted. The first wire passing groove 42 is configured to accommodate cables supplying power to the motor module 8. A second wire passing groove 43 is provided at a center of the axle 4. The second wire passing groove 43 is configured to accommodate cables supplying power to the driving mechanism 5. The axle 4 is further provided with two limiting surfaces 41. The two limiting surfaces 41 are parallel to an axis of the axle 4 and to each other. The limiting surfaces 41 are configured for mounting of the driving mechanism 5 and the gear-shifting control mechanism 6, and configured to limit the positions of the driving mechanism 5 and the gear-shifting control mechanism 6. The gear-shifting control mechanism 6 is inserted in the transmission mechanism 7, and an outer side of the transmission mechanism 7 is connected to the output component 1 to transmit the torque.

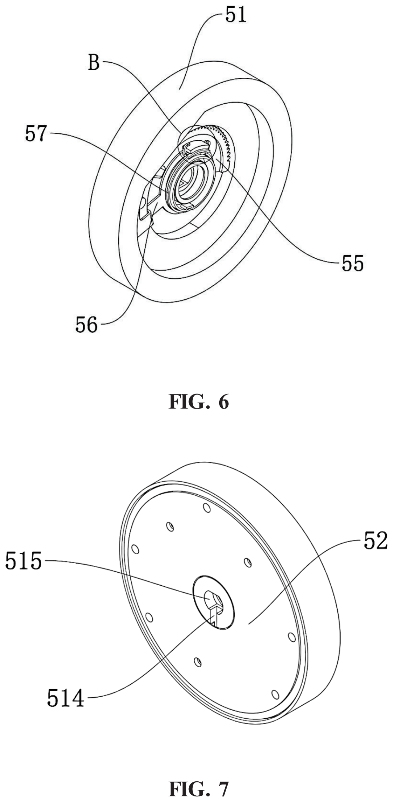

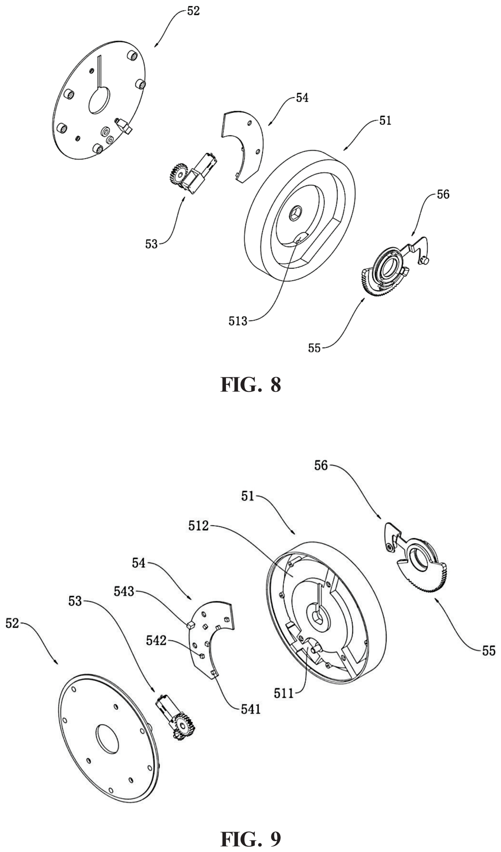

FIG. 6 is a perspective view of the driving mechanism 5. FIG. 7 is a perspective view of the driving mechanism 5 from another perspective. FIG. 8 is an exploded view of the driving mechanism 5. FIG. 9 is an exploded view of the driving mechanism 5 from another perspective. The driving mechanism 5 of the internal gear hub with the built-in motor according to the present application includes a control box 51 and a sealing cover 52 mounted at an opening of the control box 51. A driving module mounting groove 511 is provided at a lower part inside the control box 51. A driving module 53 is mounted in the driving module mounting groove 511. A circuit board mounting groove 512 is further provided at an upper part inside the control box 51. A circuit board 54 is mounted in the circuit board mounting groove 512. A first limiting groove 515 is provided at a center of the control box 51 and runs through the control box 51. The shape of the first limiting groove 515 matches a cross section of the axle 4 where the limiting surface 41 of the axle 4 is located. This prevents the control box 51 from rotating when it is sleeved on the axle 4. To facilitate the power supply and control signal transmission of the circuit board 54, the circuit board 51 is further provided with a wire passing hole 514. The wire passing hole 514 is located below the first limiting groove 515. Cables from outside the control box 51 passes through the wire passing hole 514 to be connected to the circuit board 54. The control box 51 is further provided with a through hole 53 for the engagement of a gear mechanism. The control box 51 is sealed to some degree, which effectively prevents moisture and dust from approaching the circuit board 54 and the driving module 53, thereby extending the service life of the driving module 53.

The overall structure of the circuit board 54 is semi-circular. The circuit board 54 is provided with a gear feedback module, which is configured to obtain a gear position to which the driving module 53 of the driving mechanism 5 is rotated, and a current gear position of the internal gear hub. Specifically, a controller (not shown in the drawings) and a third Hall element 543 are welded to one side of the circuit board 54. Multiple first Hall elements 541 and multiple second Hall elements 542 are welded to the other side of the circuit board 54. The side of the circuit board 54 where the first Hall elements 541, the second Hall elements 542, and the third Hall element 543 are welded faces the sealing cover 52. In the present embodiment, the internal gear hub has three gears. Accordingly, three first Hall elements 541 and three second Hall elements 542 are provided. As shown in FIG. 9, the first Hall elements 541 and the second Hall elements 542 are distributed in two rows. The three Hall elements in each row are arranged at equal intervals. Due to the limited design space and compact structure, the Hall elements in each column are staggered relative to each other by a predetermined distance. The first Hall elements 541 are located in the inner row. The first Hall elements 541 are configured to detect a corresponding magnet (not shown in the drawings) mounted in a first magnet mounting groove 555. The second Hall elements 542 are located in the outer row. The second Hall elements 542 are configured to detect a corresponding magnet (not shown in the drawings) mounted in a second magnet mounting groove 563. When the magnets in the first magnet mounting groove 555 and the second magnet mounting groove 563 rotate around their respective rotating axes and pass over the first Hall elements 541 and the second Hall elements 542 respectively, the first Hall elements 541 and the second Hall elements 542 detect the variation of magnetic field intensity and generate response pulses. Thus, their gear positions can be determined based on the obtained pulse signals. It should be noted that, the pulse signal obtained by the first Hall element 541 is used to determine the gear position of the driving module 53 of the driving mechanism 5, and the pulse signal obtained by the second Hall element 542 is used to determine the current gear position of the internal gear hub.

As shown in FIG. 9, the uppermost first Hall element 541 on the circuit board 54 corresponds to a first gear. The middle first Hall element 541 on the circuit board 54 corresponds to a second gear. The lowermost first Hall element 541 on the circuit board 54 corresponds to a third gear.

To obtain the rotational speed of the internal gear hub for automatic control of gear shifting of the internal gear hub, the driving mechanism 5 is provided with a rotational speed feedback module. The rotational speed feedback module includes a third Hall element 543. The third Hall element 543 is welded to the circuit board 54. Referring to FIG. 5, a third magnet mounting groove 11 is provided at a middle part of the output component 1. A magnet mounted in the third magnet mounting groove 11 is aligned with the third Hall element 543. During rotation of the internal gear hub, the controller obtains the rotational speed by detecting the number of pulses generated by the third Hall element 543 per unit time. More pulses indicate a higher frequency, and therefore indicate a higher rotational speed of the internal gear hub. Conversely, fewer pulses indicate a lower rotational speed.

In the present embodiment, the driving module 53 is a motor with a reducer. The motor is horizontally mounted in the driving module mounting groove 511, so as to reduce the thickness of the driving module 53, thereby providing sufficient space for the gear-shifting control mechanism 6 and the transmission mechanism 7. The reducer is specifically a worm and gear mechanism. An input shaft and an output shaft of the worm and gear mechanism is perpendicular to each other, so that an output shaft of the motor can be converted from a direction perpendicular to an axis of the control box 51 to a direction parallel to the axis of the control box 51. An output shaft of the driving module 53 passes through the through hole 513 of the control box 51 to be fastened to an output gear 58. The output gear 58 meshes externally with a transition gear 59, which further meshes externally with the gear-shifting actuating gear 55.

It should be noted that, the transition gear 59 is not necessary, and is merely provided to adapt to the current spatial arrangement of gear structures. Actually, gear shifting can also be achieved if the output gear 58 directly meshes externally with the gear-shifting actuating gear 55.

The gear-shifting control mechanism 6 and the transmission mechanism 7 may get stuck during gear shifting. In this case, if the driving mechanism 5 continues operating, it may be damaged, resulting in a decrease in the repeated positioning precision of the gear-shifting control mechanism 6 and burnout of the motor. To prevent this, a buffer structure is provided to protect the driving mechanism 5 when sticking occurs.

In the present embodiment, the buffer structure includes a gear-shifting protection component 56 and an elastic element 57. In the case that the buffer structure is added, both the gear information of the gear-shifting actuating gear 55 and the gear information of the gear-shifting protection component 56 are obtained. The controller is configured to compare the gear information of these two components. If their gear information match each other, it indicates that the previous gear shifting operation is normally performed, and the next gear shifting operation can be normally performed. If their gear information differ from each other, it indicates the occurrence of sticking. In this case, the controller is configured to call a predetermined program to control the driving module 53 to remove the sticking issue. After that, the next gear shifting operation can be performed.

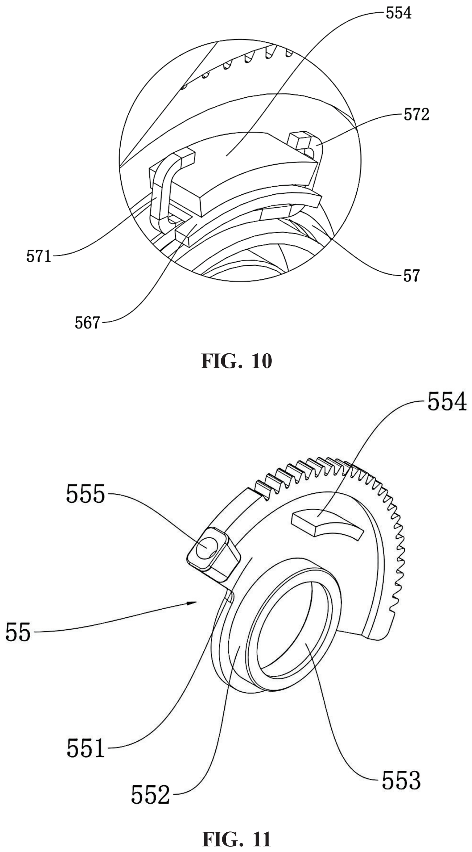

FIG. 11 is a perspective view of the gear-shifting actuating gear 55. The gear-shifting actuating gear 55 has a sector gear body 551 with a central angle close to 90 degrees. A first cylindrical protrusion 552 and a first mounting hole 553 are provided at a center of the sector gear body 551, and the first mounting hole 553 is formed on the first cylindrical protrusion 552. The first mounting hole 553 is configured to mount a bearing, which supports the gear-shifting actuating gear 55 and enables the gear-shifting actuating gear 55 to rotate around its axis. A protruding first stop block 554 is provided on a side of the gear-shifting actuating gear 55. The first stop block 554 and the first cylindrical protrusion 552 protrude in the same direction. The first magnet mounting groove 555 is provided on an outer circumferential surface of the sector gear body 551. A magnet is mounted in the first magnet mounting groove 555.

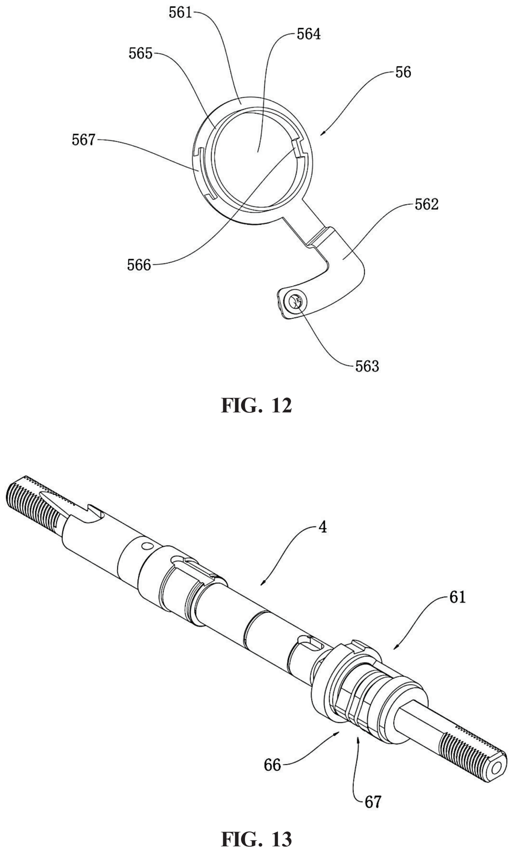

FIG. 12 is a perspective view of the gear-shifting protection component 56. The gear-shifting protection component 56 has an annular body 561. A first connecting part 562 is provided at a lower part of the annular body 561. The second magnet mounting groove 563 is provided at an end portion of the first connecting part 562. A second cylindrical protrusion 565 is provided at a center of the annular body 561. A second connecting part 566 is provided at a side wall of the second cylindrical protrusion 565. The second connecting part 566 is configured for insertion connection with the gear-shifting control mechanism 6. The second connecting part 566 is specifically a rectangular protrusion, and the number thereof is one.

The first connecting part 562 is specifically an L-shaped arm extending outward. It should be noted that, the annular body 561 and the first connecting part 562 are located in different planes. The overall position of the first connecting part 562 is at a predetermined distance above an end face of the annular body 561. During assembly of the gear-shifting actuating gear 55 and the gear-shifting protection component 56, the first cylindrical protrusion 552 of the gear-shifting actuating gear 55 is inserted in the second mounting hole 564 of the gear-shifting protection component 56. The sector gear body 551 has a certain thickness. Hence, the overall position of the first connecting part 562 is at a predetermined distance above the end face of the annular body 561, so as to compensate for the thickness of the sector gear body 551. In this way, the first magnet mounting groove 555 and the second magnet mounting groove 563 are located in the same plane, allowing the first Hall elements 541 of the circuit board 54 to better detect the signal of variation in magnetic field intensity.

The annular body 561 is further provided with a protruding second stop block 567. The second stop block 567 and the second cylindrical protrusion 565 protrude in the same direction. The first stop block 554 and the second stop block 567 are both elongated arc-shaped protrusions. A length of the second stop block 567 is slightly smaller than a length of the first stop block 554. When the gear-shifting actuating gear 55 and the gear-shifting protection component 56 are assembled, as shown in FIG. 10, an elastic element 57 is sleeved on an outer circumferential surface of the second cylindrical protrusion 565. The elastic element 57 has a first engaging end 571 and a second engaging end 572, which respectively abut against two side edges of the first stop block 554. In this case, the second stop block 567 is located directly below the first stop block 554. Normally, the first engaging end 571 and the second engaging end 572 of the elastic element 57 do not contact side edges of the second stop block 567, since the length of the second stop block 567 is slightly smaller than the length of the first stop block 554. In the present embodiment, the elastic element 57 is a torsion spring.

When the gear-shifting control mechanism 6 and the transmission mechanism 7 operate normally without getting stuck, the driving module 53 rotates to drive the output gear 58 to rotate. The output gear 58 drives the gear-shifting actuating gear 55 to rotate through external mesh therebetween. The gear-shifting actuating gear 55 drives the gear-shifting protection component 56 to synchronously rotate via the elastic element 57. When the gear-shifting control mechanism 6 and the transmission mechanism 7 get stuck, the gear-shifting protection component 56 is prevented from rotating by a resistance. Thus, the gear-shifting actuating gear 55 circumferentially moves relative to the gear-shifting protection component 56. The first stop block 554 of the gear-shifting actuating gear 55 is staggered relative to the second stop block 567 of the gear-shifting protection component 56. The first engaging end 571 of the elastic element 57 still abuts against one side edge of the first stop block 554, while a side edge of the second stop block 567 pushes the second engaging end 572 of the elastic element 57 away, releasing the abutment between the second engaging end 572 and the other side edge of the first stop block 554. Instead, the second engaging end 572 abuts against the side edge of the second stop block 567. A distance between the first engaging end 571 and the second engaging end 572 is increased, and the elastic element 57 is compressed. The gear information of the gear-shifting actuating gear 55 and the gear-shifting protection component 56 obtained by the controller are different, which indicates the occurrence of sticking. Then, the controller controls the driving module 53 to rotate forward and backward a number of times to release the gear-shifting actuating gear 6 and the transmission mechanism 7 from being stuck, and the elastic element 57 recovers to its initial state.

In this configuration, the elastic element 57 connects the gear-shifting actuating gear 55 and the gear-shifting protection component 56, which creates a flexible connection rather than a rigid connection. As such, when the components get stuck, the torque generated by the driving module 53 can be absorbed by the elastic element 57, providing buffer effects. This not only prevents the components from being damaged, but also prevents burnout of the driving module 53, thereby effectively extending the service life of the driving mechanism 5.

FIG. 13 is a perspective view of the gear-shifting control mechanism 6. The gear-shifting control mechanism 6 includes a gear-shifting control module 61, a pawl, and a pawl seat 65. The pawl is mounted to the pawl seat 65. The gear-shifting control module 61 is provided with an open groove. The driving module 53 drives the gear-shifting control module 61 to rotate, thereby controlling the pawl to expand and retract in a regular manner.

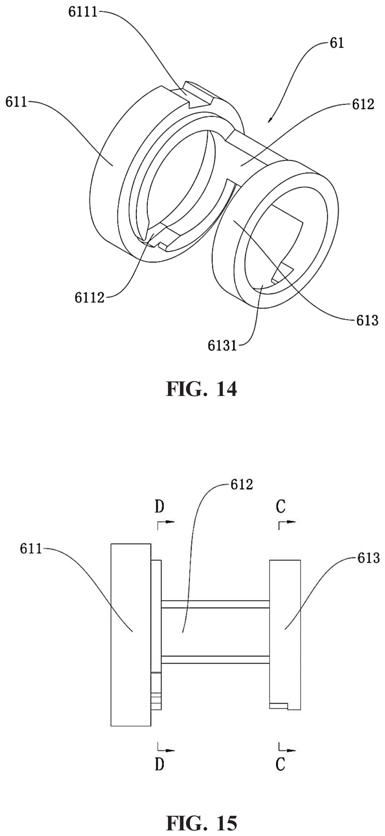

As shown in FIGS. 14 and 15, the gear-shifting control module 61 includes a first end part 611 and a second end part 613 respectively located at both ends of the gear-shifting control module 61. The first end part 611 and the second end part 613 are connected via a connecting rod 612. A third connecting part 6111 is provided at the first end part 611 for assembly with the driving mechanism 5. The third connecting part 6111 matches the second connecting part 566 described above. That is, if the second connecting part 566 is a rectangular protrusion, the third connecting part 6111 is a corresponding rectangular groove. Alternatively, the second connecting part 566 is a rectangular groove, and in this case, the third connecting part 6111 is a corresponding rectangular protrusion.

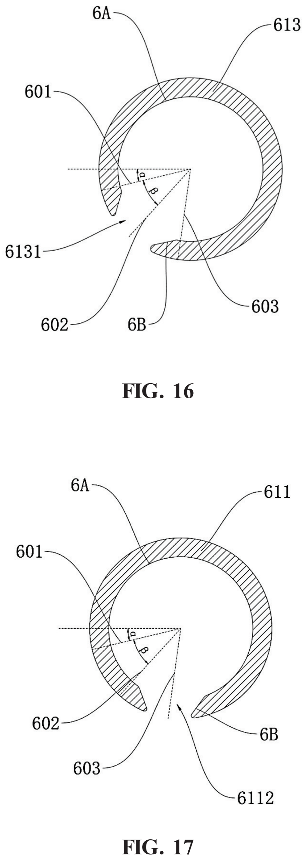

FIG. 16 is a sectional view of the second end part 613 of the gear-shifting control module 61 taken along a line C-C. A first open groove 6131 is provided on an outer circumferential surface of the second end part 613. An inner circumferential surface of the second end part 613 is a first control surface 6A. A side wall of the first open groove 6131 is a second control surface 6B. In the present embodiment, the first control surface 6A is an arc surface, and the second control surface 6B is an inclined surface. The inclined second control surface 6B provides transition between the arc first control surface 6A and the outer circumferential surface of the second end part 613. The first control surface 6A and the second control surface 6B are configured for control of expansion and retraction of the pawl. FIG. 17 is a sectional view of the first end part 611 of the gear-shifting control module 61 taken along a line D-D. A second open groove 6112 is provided on an outer circumferential surface of the first end part 611.

In FIG. 16, there are three hypothetical straight lines passing through a center of the second end part 613. An angle between a first straight line and a horizontal line is α. An angle between each two adjacent straight lines is β. It is assumed that the first straight line represents a first gear angle 601, a second straight line represents a second gear angle 602, and a third straight line represents a third gear angle 603. Thus, the first gear angle 601 is α, the second gear angle 602 is α+β, and the third gear angle 603 is α+2β.

By controlling the gear-shifting control module 61 to rotate to different angles, different pawls are controlled to expand or retract, thereby shifting between different gears. The specific configurations are described below. When the gear-shifting control module 61 rotates to the first gear angle 601, all the pawls retract. When the gear-shifting control module 61 rotates to the second gear angle 602, a second pawl 67 expands, while a first pawl 66 retracts. When the gear-shifting control module 61 rotates to the third gear angle 603, the first pawl 67 expands, while the second pawl 66 retracts.

The first gear angle 601 through the third gear angle 603 correspond to the respective first Hall elements 541 of the circuit board 54.

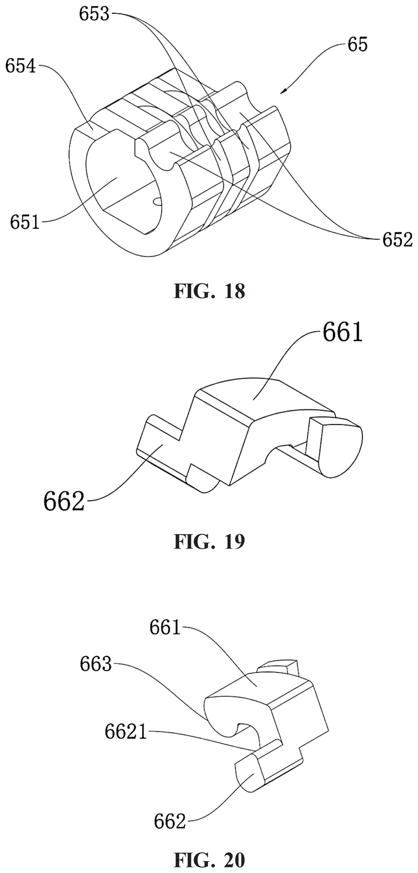

FIG. 18 is a perspective view of the pawl seat 65. The overall structure of the pawl seat 65 is columnar. A second limiting groove 651 is provided at a center of the pawl seat 65. Similar to the first limiting groove 515, the shape of the second limiting groove 651 matches the cross section of the axle 4 where the limiting surface 41 of the axle 4 is located, so as to prevent the pawl seat 65 from rotating when it is sleeved on the axle 4 as well. Two pawl mounting grooves 652 are provided at an upper part of the pawl seat 65. The first pawl 66 and the second pawl 67 are mounted in the respective pawl mounting groove 652. Two circlip grooves 653 are further provided on the outer circumferential surface of the pawl seat 65. Each of the circlip grooves 653 is located in a plane perpendicular to an axis of the pawl seat 65. A circlip (not shown in the drawings) is mounted in each circlip groove 653. During assembly, the circlips are kept retracted, and therefore they have a tendency to expand outward, applying expansion forces to the first pawl 66 and the second pawl 67. As such, the first pawl 66 and the second pawl 67 are kept expanding outward, and will only retract inward when subjected to forces in a predetermined direction.

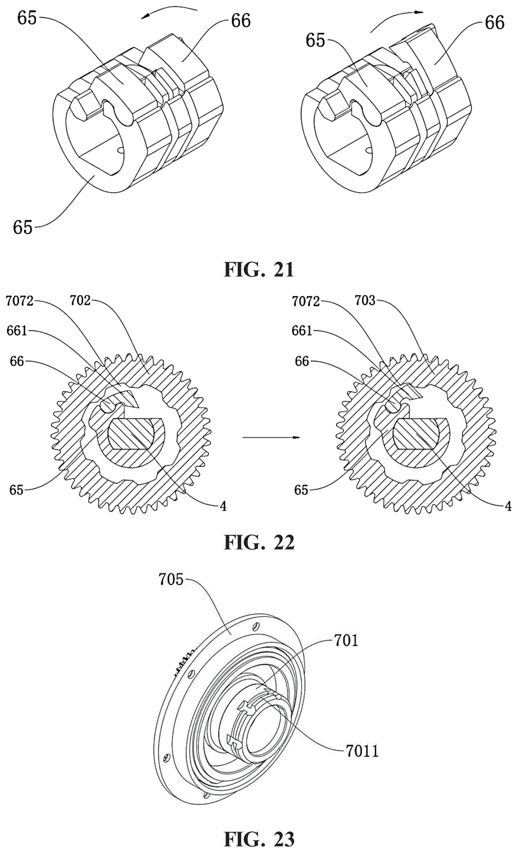

The structure of the first pawl 66 is shown in FIGS. 19 and 20. The first pawl 66 has a locking part 661, a control part 662, and a rotating shaft part 663. The rotating shaft part 663 is arranged at a bottompart of the locking part 661, and is in the form of a semi-cylinder. The shape of the pawl mounting groove 652 of the pawl seat 65 matches the shape of the rotating shaft part 663. The rotating shaft part 663 is hinged to the pawl mounting groove 652, so that the first pawl 66 rotates around an axis of the rotating shaft part 663. The locking part 661 of the first pawl 66 is configured to engage with and disengage from a gear of the transmission mechanism 7. The control part 662 of the first pawl 66 protrudes in a thickness direction of the locking part 661. One of side surfaces of the control part 662 is a contact surface 6621. FIG. 21 is a schematic structural view of the first pawl 66 in two states. When the gear-shifting control module 61 rotates to a predetermined angle, the first control surface 6A of the gear-shifting control module 61 contacts the contact surface 6621 of the control part 662, and applies a force to the contact surface 6621 of the control part 662 towards the center of the pawl seat 65, making the first pawl 66 retract inward against the expansion force of the circlip. When the gear-shifting control module 61 rotates to another predetermined angle, the gear-shifting control module 61 transitions from the first control surface 6A to the second control surface 6B (i.e., the side surface of the open groove) of the gear-shifting control module 61 for contact with the contact surface 6621 of the control part 662. As the force applied by the second control surface 6B towards the center of the pawl seat 65 gradually decreases, the first pawl 66 gradually expands outward. To prevent interference between the retracted pawl and the pawl seat 65, the pawl seat 65 is further provided with an avoidance groove 654.

FIG. 22 is a schematic structural view showing the interaction of the first pawl 66 and the first sun gear 702. The first sun gear 702 is supported by a bearing. A locking groove 7022 is provided at a center of the first sun gear 702. The locking groove 7022 is similar to a spline groove in shape, but differs from it in that a groove wall of the locking groove 7022 expands outward. The groove wall of the locking groove 7022 faces a side wall of the first pawl 66. When the first pawl 66 retracts inward, the locking part 661 of the first pawl 66 does not contact the groove wall of the locking groove 7022, and the first sun gear 702 is in a free state. When the first pawl 66 expands outward, the locking part 661 of the first pawl 66 abuts against the groove wall of the locking groove 7022, and the first sun gear 702 is in a locked state, that is, the first sun gear 702 cannot rotate in a counterclockwise direction. Similarly, the second sun gear 703 is also provided with the same locking groove 7022.

It should be noted that, when gear shifting operation is performed during cycling, the motor module 8 drives the transmission mechanism 7 to rotate at a high speed, and the locking groove 7022 applies a large force to the pawl. In this case, the pawl is effectively stuck and cannot retract freely. As a result, during rotation of the gear-shifting control module 61, the pawl applies a large force to the first control surface 6A or the second control surface 6B of the gear-shifting control module 61. In other words, the pawl applies a large resistance to the gear shifting operation of the gear-shifting control module 61, which may easily cause failure in gear shifting. Therefore, it is necessary to limit the current supplied to the motor module 8 or interrupt the power supply to the motor module 8 for 1 to 3 seconds. Through current limitation or power supply interruption, the rotational speed of the transmission mechanism 7 is reduced, thereby reducing the force applied by the locking groove 7022 to the pawl and facilitating successful gear shifting. This method is also suitable for a mid-drive motor and an external gear-shifting module, which will not be described in detail herein.

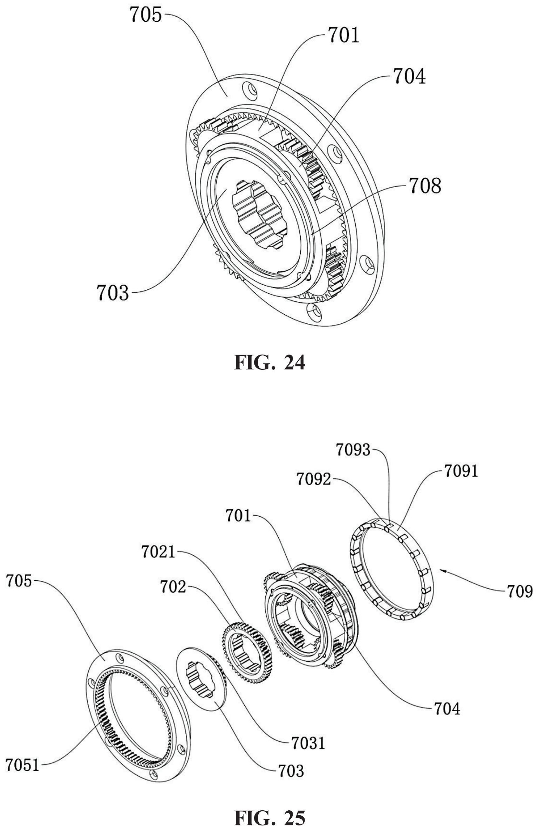

FIG. 23 is a perspective view of the transmission mechanism 7. FIG. 24 is an exploded view of the driving mechanism 7. The transmission mechanism 7 includes at least one planetary gear mechanism and at least one clutch structure. In the present embodiment, one planetary gear mechanism is provided. Each planetary gear mechanism includes a sun gear, a planetary carrier, a gear ring, and at least one planetary gear. The transmission mechanism 7 specifically includes a planetary carrier 701, a first sun gear 702, a second sun gear 703, a dual planetary gear 704, and a gear ring 705.

The overall structure of the planetary carrier 701 is a hollow cylinder that has a larger diameter at its left end and a smaller diameter at its right end. An input component mounting groove 7011 is provided on an outer circumferential surface of the right end of the planetary carrier 701. The input component 3 is mounted in the input component mounting groove 7011 and is fastened to the planetary carrier 701 to transmit torque. The first sun gear 702 and the second sun gear 703 are mounted at the left side in the hollow cylindrical structure of the planetary carrier 701.

A mounting groove is provided on an outer peripheral surface of the planetary carrier 701. Each of two opposite groove walls of the mounting groove is provided with one third mounting hole 7012. A pin 707 passes through a central hole of the dual planetary gear 704, a bushing 706, and the third mounting holes 7012 to mount the dual planetary gear 704 in the mounting groove. Pin retaining rings 708 are provided at both ends of the pin 707 to limit the position of the pin 707. The fitting relationships among the components include: the pin 707 is in interference fit with the third mounting holes 7012, and the pin 707 is in transition or clearance fit with the central hole of the dual planetary gear 704. The dual planetary gear 704 can rotate around its axis.

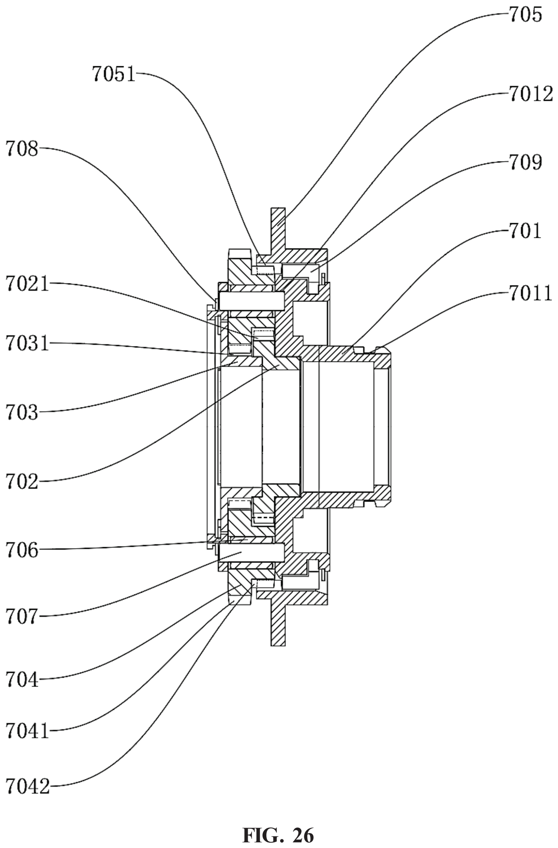

As shown in FIG. 26, the dual planetary gear 704 has third gear teeth 7041 and fourth gear teeth 7042. The third gear teeth 7041 are located at a right side of the fourth gear teeth 7042. The first sun gear 702 and the second sun gear 703 are mounted directly below the dual planetary gear 704. First gear teeth 7021 of the first sun gear 702 mesh externally with the third gear teeth 7041 of the dual planetary gear 704. Second gear teeth 7031 of the second sun gear 703 mesh externally with the fourth gear teeth 7042 of the dual planetary gear 704.

In the present embodiment, four mounting grooves are provided, which can mount four dual planetary gears 704. The number of the dual planetary gears 704 may be determined according to actual operation conditions and loads of the transmission mechanism 7. Generally, higher loads require more dual planetary gears 704.

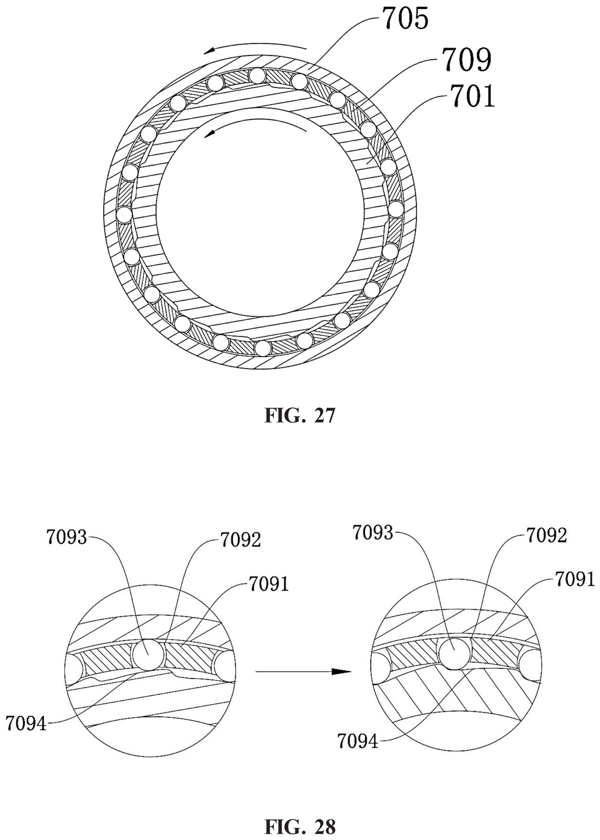

A clutch structure 709 is further provided at a middle part of the planetary carrier 701. A bottom surface of the clutch structure 709 is connected to an outer circumferential surface of the planetary carrier 701, and a top surface of the clutch structure 709 is connected to an inner circumferential surface of the gear ring 705. FIG. 27 is a schematic structural view of the clutch structure. FIG. 28 is a schematic structural view of the clutch structure 709 in two states. The clutch structure 709 specifically includes a cage 7091, rollers 7093, and working surfaces 7094 for achieving the clutch function. A diameter of the cage 7091 is larger than a diameter of the outer circumferential surface of the planetary carrier 701 at the section plane, and is smaller than a diameter of an inner circumferential surface of the gear ring 705 at the section plane. The cage 7091 is provided with multiple roller limiting grooves 7092. The rollers 7093 are assembled in the roller limiting grooves 7092, and each roller 7093 is rotatable only around its axis. The rollers 7093 may be cylindrical rollers, balls, or the like. In the present embodiment, the rollers 7093 are cylindrical rollers.

The working surfaces 7094 of the clutch structure 709 may be provided on a separate component which is then assembled to the planetary carrier 701, or may be directly provided on the planetary carrier 701. In the present embodiment, the working surfaces 7094 of the clutch structure 709 are directly provided on the outer circumferential surface of the planetary carrier 701 at the section plane. The working surfaces 7094 include multiple curved surfaces connected end to end. A height of a left end of each curved surface is lower than a height of a right end of the curved surface, creating a height difference. When the rollers 7093 are mounted to the cage 7091, they can roll on the respective working surfaces 7094 where they are located. A diameter of each roller 7093 is larger than a minimum distance between the working surface 7094 and the inner circumferential surface of the gear ring 705 at the section plane. Therefore, the roller 7093 can only roll on the working surface 7094 where it is located, but will not move beyond the working surface 7094 to reach other adjacent working surfaces 7094.

When the planetary carrier 701 and the gear ring 705 both rotate counterclockwise, and the rotational speed of the planetary carrier 701 is higher than that of the gear ring 705, the roller 7093 moves to a high point of the working surface 7094, causing the outer circumferential surface of the planetary carrier 701, the roller 7093, and the inner circumferential surface of the gear ring 705 to engage. The torque can be transmitted from the planetary carrier 701 to the gear ring 705 via the clutch structure 709. When the planetary carrier 701 and the gear ring 705 both rotate counterclockwise, and the rotational speed of the planetary carrier 701 is lower than that of the gear ring 705, the roller 7093 moves to a low point of the working surface 7094, causing the roller 7093 to disengage from the outer circumferential surface of the gear ring 705. In this case, the torque will not be transmitted from the planetary carrier 701 to the gear ring 705 via the roller 7093.

The distance between the high point and the low point of the working surface 7094 is very small, which is only several tenths of a millimeter. Therefore, every time the rotational speed of the planetary carrier 701 exceeds that of the gear ring 705, the planetary carrier 701, the roller 7093, and the gear ring 705 can engage in a very short time period, so that the power transmission is very fast, thereby effectively shortening the idle pedaling time during gear shifting and making the gear shifting process smoother.

With the clutch structure 709 provided between the planetary carrier 701 and the gear ring 705, the torque is selectively output from one of the planetary carrier 701 and the gear ring 705 that has a higher rotational speed, thereby changing the transmission ratio.

According to the internal gear hub with the built-in motor, the driving mechanism 5 drives the gear-shifting control module 61 of the gear-shifting control mechanism 6 to rotate to different angles. For example, if the gear-shifting control module 61 rotates from the first gear angle 601 to the second gear angle 602, the internal gear hub is upshifted from a first gear to a second gear. If the gear-shifting control module 61 rotates from the second gear angle 602 to the first gear angle 601, the internal gear hub is downshifted from the second gear to the first gear. The driving mechanism 5 has two driving modes, namely a manual mode and an automatic mode. Switching between the driving modes can be achieved by the internal gear hub in cooperation with the gear-shifting operation module 10. If the gear-shifting operation module 10 is mounted on the handlebars of the bicycle, the rider can press the gear-shifting operation module 10 by fingers to control. The gear-shifting operation module 10 has a mode switch button, an upshift button, and a downshift button. The rider can switch between the manual mode and the automatic mode by pressing the mode switch button. In the manual mode, the rider can upshift the gear by pressing the upshift button, and can downshift the gear by pressing the downshift button. In the automatic mode, no operation is needed for the rider. The internal gear hub performs gear shifting operations according to the speed of the bicycle. For example, if the speed of the bicycle increases to 10 kilometers per hour or above, the internal gear hub automatically upshifts from the first gear to the second gear. For example, if the speed decreases to 10 kilometers per hour or below, the internal gear hub automatically downshifts from the second gear to the first gear. The rider can switch to the manual mode according to actual road conditions to freely shift the gear for higher flexibility of cycling. The rider can also switch to the automatic mode to automatically shift the gear for higher levels of cycling comfort.

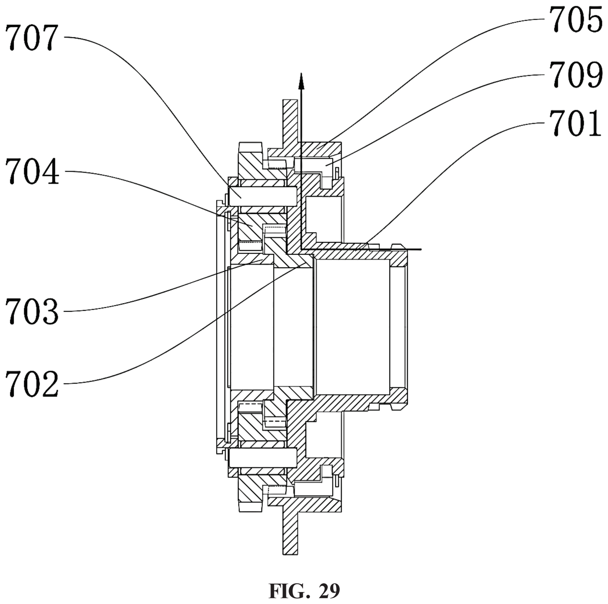

FIG. 29 shows a power transmission path of the internal gear hub with the built-in motor in the first gear.

Assume that the number of teeth of the first gear teeth 7021 is z1, the number of teeth of the second gear teeth 7031 is z2, the number of teeth of the third gear teeth 7041 is z3, the number of teeth of the fourth gear teeth 7042 is z4, and the number of teeth of the fifth gear teeth 701 is z5.

In the first gear, the first sun gear 702 and the second sun gear 703 are both in a free state. The torque input by the input component 3 is transmitted to the planetary carrier 701 first. The rotating planetary carrier 701 drives the first dual planetary gear 704 to rotate, and the first sun gear 702 and the second sun gear 703 both idle. At a certain moment, the rotational speed of the planetary carrier 701 is higher than that of the gear ring 705, causing the first clutch structure 709 to engage, which synchronizes the rotational speeds of the planetary carrier 701 and the 705. The torque is transmitted from the planetary carrier 701 to the gear ring 705, and from the gear ring 705 to the second end cover 22. The second end cover 22 is fastened to the output component 1, and the torque is output from the output component 1 to the wheel. In this case, the planetary gear mechanism of the internal gear hub does not operate to change the speed. The transmission ratio in this case is defined as a first transmission ratio i1, and i1 = 1.

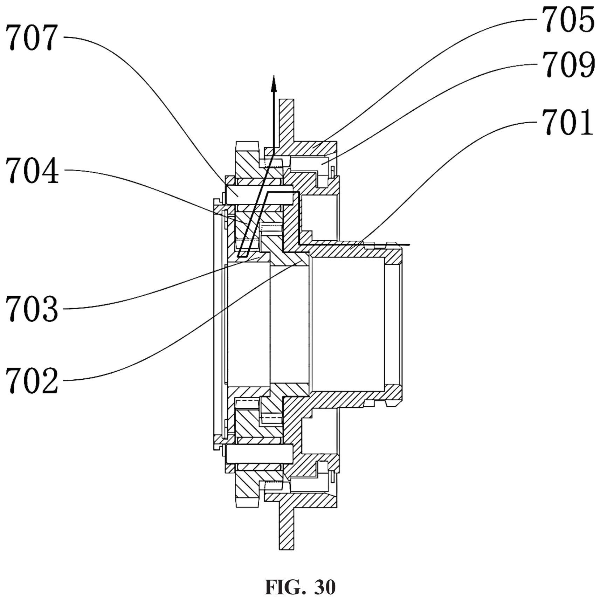

FIG. 30 shows a power transmission path of the internal gear hub with the built-in motor in the second gear.

In the second gear, the second sun gear 703 is locked, and the first sun gear 702 is in the free state. The torque input by the input component 3 is transmitted to the planetary carrier 701 first. The rotating planetary carrier 701 drives the dual planetary gear 704 to rotate. The third gear teeth 7041 of the dual planetary gear 704 meshes externally with the second gear teeth 7031 of the second sun gear 703. According to the transmission principle of the planetary gear mechanism, when the sun gear is fixed, and the planetary carrier 701 is a driving member, the gear ring 705 is a driven member, and the mechanism is in overdrive gear. Therefore, the rotational speed of the gear ring 705 (the driven member) is higher than that of the planetary carrier 701 (the driving member). In this case, the clutch structure 709 is disengaged and does not operate. The torque is transmitted from the gear ring 705 to the second end cover 22. The second end cover 22 is fastened to the output component 1, and the torque is output from the output component 1 to the wheel. In this case, the transmission ratio of the internal gear hub is defined as a second transmission ratio i2, and i2 = 1/{1+(z1×z4)/(z5×z3)}.

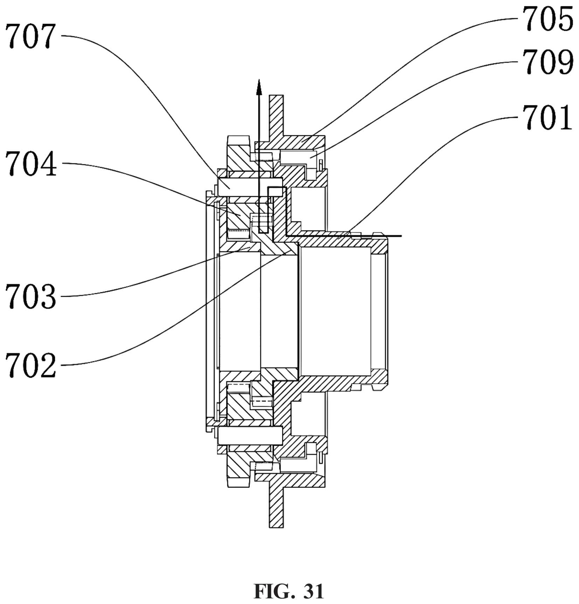

FIG. 31 shows a power transmission path of the internal gear hub with the built-in motor in the third gear.

In the third gear, the first sun gear 702 is locked, and the second sun gear 703 is in the free state. The torque input by the input component 3 is transmitted to the planetary carrier 701 first. The rotating planetary carrier 701 drives the dual planetary gear 704 to rotate. The fourth gear teeth 7042 of the dual planetary gear 704 meshes externally with the first gear teeth 7021 of the first sun gear 702. According to the transmission principle of the planetary gear mechanism, when the sun gear is fixed, and the planetary carrier 701 is a driving member, the gear ring 705 is a driven member, and the mechanism is in overdrive gear. Therefore, the rotational speed of the gear ring 705 (the driven member) is higher than that of the planetary carrier 701 (the driving member). In this case, the clutch structure 709 is disengaged and does not operate. The torque is transmitted from the gear ring 705 to the second end cover 22. The second end cover 22 is fastened to the output component 1, and the torque is output from the output component 1 to the wheel. In this case, the transmission ratio of the internal gear hub is defined as a third transmission ratio i3, and i3 = 1/{1+z5/z2}.

It can be seen that, the first transmission ratio through the third transmission ratio are all smaller than or equal to 1. The lower the gear, the higher the transmission ratio, the lower the rotational speed, the larger the torque, which is suitable for climbing or carrying heavy loads. The higher the gear, the lower the transmission ratio, the higher the rotational speed, the smaller the torque, which is suitable for riding downhill or carrying light loads. In order to improve the smoothness of gear shifting, the number of teeth of the first gear teeth 7021 through the fifth gear teeth 7051 may be reasonably adjusted to fit the first transmission ratio through the third transmission ratio into a linear equation in two variables.

The internal gear hub with the built-in motor according to the present application has both manual and automatic gear shifting modes. In the manual gear shifting mode, the rider can freely shift the gear according to actual road conditions, thereby enhancing flexibility of cycling. In the automatic gear shifting mode, the gear is automatically shifted according to a program, thereby improving cycling comfort. The motor provides auxiliary power, which makes cycling easier and more convenient and increases the adaptability, so that it is suitable for various terrains and scenarios such as urban cycling, suburban cycling, mountain biking, travel, commuting, and other applications.

In the description of this specification, descriptions referring to the terms "one embodiment", "some embodiments", "exemplary embodiment", "example", "specific example", "some examples", etc., mean that specific features, structures, materials or characteristics described in conjunction with the embodiment or example are included in at least one embodiment or example of the present application. In this specification, schematic expressions of the above terms do not necessarily refer to the same embodiment or example. Furthermore, the specific features, structures, materials or characteristics described may be combined in any suitable manner in any one or more embodiments or examples.

Only some of the embodiments of the present application are described above. For those skilled in the art, a few of modifications and improvements may be made to the present application without departing from the concept of the present application, and these modifications and improvements are also deemed to fall into the protection scope of the present application.

## Claims

1. An internal gear hub with a built-in motor, comprising:
a motor module (8);
an input component (3);
an output component (1);
and an axle (4), wherein
the axle (4) is fixed on a frame, and the motor module (8) is mounted on the axle (4) and configured to output a torque to the output component (1);
the internal gear hub further comprises a driving mechanism (5), a gear-shifting control mechanism (6), and a transmission mechanism (7), which are connected in the listed sequence and mounted on the axle (4);
the input component (3) is fixedly connected to the transmission mechanism (7) and configured to input a torque to the transmission mechanism (7), the output component (1) is connected to the transmission mechanism (7) and configured to output the torque to a wheel, and the transmission mechanism (7) has at least two transmission ratios; and
the driving mechanism (5) is configured to manually and/or automatically drive the gear-shifting control mechanism (6) to rotate to a predetermined angle, to change a transmission relationship among components of the transmission mechanism (7) to shift among the transmission ratios of the transmission mechanism (7).

2. The internal gear hub with the built-in motor according to claim 1, wherein the motor module (8) comprises a stator (81) and a magnet (82), the stator (81) is fixed to the axle (4), and the magnet (82) is arranged at a radial side of the stator (81) and is connected to the output component (1).

3. The internal gear hub with the built-in motor according to claim 2, wherein
the motor module (8) further comprises a motor reduction module (83), and the motor reduction module (83) comprises a reduction planetary carrier (831), a reduction planetary gear (832) hinged to the reduction planetary carrier (831), a reduction sun gear (833), and a reduction gear ring (834); and
the reduction sun gear (833) is fixed to the axle (4), the reduction sun gear (833) meshes externally with the reduction planetary gear (832), the reduction gear ring (834) meshes internally with the reduction planetary gear (832), the magnet (82) is connected to the reduction planetary carrier (831), and the reduction gear ring (834) is connected to the output component (1).

4. The internal gear hub with the built-in motor according to claim 1, wherein the driving mechanism (5) is an electric driving mechanism.

5. The internal gear hub with the built-in motor according to claim 1, wherein a buffer structure is connected between the driving mechanism (5) and the gear-shifting control mechanism (6).

6. The internal gear hub with the built-in motor according to claim 5, wherein the buffer structure comprises a gear-shifting protection component (56) and an elastic element (57), one end of the elastic element (57) is connected to the gear-shifting protection component (56), and the other end of the elastic element (57) is connected to the gear-shifting control mechanism (6).

7. The internal gear hub with the built-in motor according to claim 1, wherein the driving mechanism (5) comprises a driving module (53), an output gear (58), and a gear-shifting actuating gear (55), an output shaft of the driving module (53) is connected to the output gear (58), the output gear (58) meshes with the gear-shifting actuating gear (55), and the gear-shifting actuating gear (55) is connected to the gear-shifting control mechanism (6).

8. The internal gear hub with the built-in motor according to claim 1, wherein the driving mechanism (5) is provided with a gear feedback module.

9. The internal gear hub with the built-in motor according to claim 8, wherein the gear feedback module comprises a plurality of first Hall elements (541) arranged in a row, and the first Hall elements (541) are configured to detect a magnetic field intensity of a magnet mounted in a first magnet mounting groove (555) of a gear-shifting actuating gear (55) of the driving mechanism (5) to obtain a pulse signal, and determine a gear position to which a driving module (53) of the driving mechanism (5) is rotated.

10. The internal gear hub with the built-in motor according to claim 8, wherein the gear feedback module comprises a plurality of second Hall elements (542) arranged in a row, and the second Hall elements (542) are configured to detect a magnetic field intensity of a magnet mounted in a second magnet mounting groove (563) of a gear-shifting protection component (56) of the driving mechanism (5) to obtain a pulse signal, and determine a current gear position of the internal gear hub.

11. The internal gear hub with the built-in motor according to claim 1, wherein the driving mechanism (5) is provided with a rotational speed feedback module.

12. The internal gear hub with the built-in motor according to claim 11, wherein the rotational speed feedback module comprises a third Hall element (543), and the third Hall element (543) is configured to detect a magnetic field intensity of a magnet mounted in a third magnet mounting groove (11) of the output component (1) to obtain a pulse signal, and calculate a rotational speed of the internal gear hub.

13. The internal gear hub with the built-in motor according to claim 1, wherein
the driving mechanism (5) further comprises a control box (51) and a sealing cover (52) connected to the control box (51);
a driving module (53) and a circuit board (54) are mounted in the control box (51), and the circuit board (54) is provided with a gear feedback module, a rotational speed feedback module, and a controller; and
the driving module (53), the gear feedback module, and the rotational speed feedback module are electrically connected to the controller.

14. The internal gear hub with the built-in motor according to claim 1, wherein the gear-shifting control mechanism (6) is provided with a pawl seat (65) and a gear-shifting control module (61), the pawl seat (65) is sleeved on the axle (4), a pawl is hinged to the pawl seat (65), the gear-shifting control module (61) is provided with an open groove, and the open groove is configured to control the pawl to expand or retract to change the transmission relationship among the components of the transmission mechanism (7).

15. The internal gear hub with the built-in motor according to claim 14, wherein the number of the open groove is plural.

16. The internal gear hub with the built-in motor according to claim 14, wherein the open groove is arranged between adjacent gear angles.

17. The internal gear hub with the built-in motor according to claim 14, wherein the open groove is provided with a control surface, which is configured to control the pawl to expand or retract.

18. The internal gear hub with the built-in motor according to claim 17, wherein the control surface comprises a first control surface (6A) and a second control surface (6B), the first control surface (6A) is an arc surface and is configured to control the pawl to retract, and the second control surface (6B) is an inclined surface and is configured to control the pawl to expand.

19. The internal gear hub with the built-in motor according to claim 1, wherein the gear-shifting control mechanism (6) and the transmission mechanism (7) are connected by insertion.

20. The internal gear hub with the built-in motor according to claim 19, wherein the gear-shifting control mechanism (6) is provided with a third connecting part (6111), the driving mechanism (5) is provided with a second connecting part (566), and the third connecting part (6111) of the gear-shifting control mechanism (6) and the second connecting part (566) of the transmission mechanism (7) are connected by insertion.

21. The internal gear hub with the built-in motor according to claim 14, wherein the gear-shifting control mechanism (6) comprises a gear-shifting control module (61), and the gear-shifting control module (61) comprises a first end part (611) and a second end part (613) that are connected by a connecting rod (612).

22. The internal gear hub with the built-in motor according to claim 1, wherein the transmission mechanism (7) is provided with at least two planetary gear mechanisms and at least one clutch structure (709), the driving mechanism (5) is configured to manually or automatically change a transmission relationship of the planetary gear mechanisms, the planetary gear mechanisms are configured to change the rotational speed and transmit the torque, and the clutch structure (709) is configured to selectively output the torque to the output component (1).

23. The internal gear hub with the built-in motor according to claim 22, wherein
the planetary gear mechanisms comprise a first sun gear (702), a second sun gear (703), a planetary carrier (701), a dual planetary gear (704), and a gear ring (705), and the dual planetary gear (704) is rotatably connected to the planetary carrier (701);
the gear ring (705) has fifth gear teeth (7051), the dual planetary gear (704) has third gear teeth (7041) and fourth gear teeth (7042), the first sun gear (702) has first gear teeth (7021), and the second sun gear (703) has second gear teeth (7031); and
the first gear teeth (7021) of the first sun gear (702) mesh externally with the third gear teeth (7041) of the dual planetary gear (704), the second gear teeth (7031) of the second sun gear (703) mesh externally with the fourth gear teeth (7042) of the dual planetary gear (704), and the fifth gear teeth (7051) of the gear ring (705) mesh internally with the fourth gear teeth (7042) of the dual planetary gear (704).

24. The internal gear hub with the built-in motor according to claim 23, wherein the clutch structure (709) is arranged between the planetary carrier (701) and the gear ring (705).

25. A bicycle, comprising the internal gear hub with the built-in motor according to any one of claims 1 to 24.

26. A control method for gear shifting, applied to a bicycle with a motor and a gear-shifting module, comprising:
interrupting a power input to a motor module or limiting a current supplied to the motor module before the gear-shifting module performs a gear shifting operation;
keeping the interruption or the limitation for a predetermined period of time until the gear shifting operation is finished; and
restoring the power input to the motor module or removing the limitation to the current supplied to the motor module.
